(19) Europäisches Patentamt / European Patent Office / Office européen des brevets

(11) **EP 2 112 500 A1**

(12) **EUROPEAN PATENT APPLICATION**

(43) Date of publication:
**28.10.2009 Bulletin 2009/44**

(51) Int Cl.:
*G01N 21/47* (2006.01)     *G01N 21/64* (2006.01)
*G01N 33/551* (2006.01)     *G02B 6/122* (2006.01)

(21) Application number: **08305117.7**

(22) Date of filing: **22.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Koninklijke Philips Electronics N.V.**
**5621 BA Eindhoven (NL)**

(72) Inventors:
• **Boer, Ruth W. I.**
  **75008 Paris (FR)**
• **Klunder, Derk J. W.**
  **75008 Paris (FR)**

(74) Representative: **van Oudheusden-Perset, Laure E.**
**Philips Intellectual Property & Standards**
**High Tech Campus 44**
**5656 AE Eindhoven (FR)**

(54) **Plasmonic biosensor**

(57)    A plasmonic sensor for detecting radiation emitted in a biological, chemical and/or biochemical assay based on surface plasmon-coupled emission is described. In order to avoid loss of radiation not coupled out in a grating-assisted way, the plasmonic sensor is provided with a conductive layer (1) with a grating supporting a first plasmon having a substantial intensity contribution. The device, e.g. the conductive layer (1) and the first medium (2), is adapted for supporting grating-assisted outcoupling of Plasmon emission and for suppressing non-grating assisted outcoupling.

FIG. 1

EP 2 112 500 A1

**Description**

FIELD OF THE INVENTION

The present invention relates to devices and methods for detecting analytes in biological, chemical and/or biochemical assays using surface plasmon-coupled emission. In particular the present invention can be used for example in the field of in-vitro diagnostics.

BACKGROUND OF THE INVENTION

The detection of low concentrations of an analyte in a sample fluid such as a biological sample fluid is a challenging matter that attracted much research in the last few years. Often this is accomplished by capturing selectively the analyte with a binding composition, which is attached to a solid surface. Whether or not the binding has occurred is detected by measuring the presence of a label that has either previously been attached to the target, or is linked to a second binding composition that binds to the captured analyte. Often the label is fluorescent and the detection is achieved by optical means, however also chemiluminescent, magnetic or sonic detections are possible.

It is generally known that surface plasmon polaritons (SPPs) on a metal surface can be used to detect analytes present within approximately 200nm above the surface.

Surface plasmons Polaritons (SPPs) are electromagnetic surface waves present at the interface between a metal and a dielectric. The surface plasmons result in a strong enhancement of the optical field close to the metal surface. This localized field enhancement effect is of interest for a large number of optical phenomena.

For many years surface plasmon sensors have been used to sensitively detect changes in refractive index close to the metal surface. These properties of Surface Plasmons have been used to make biosensors. The disadvantage of these sensors is that they detect changes in refractive index and are therefore sensitive to changes in other environmental parameters influencing the refractive index such as temperature. Furthermore, it seems advantageous in many applications to use specific labels to enhance the specificity and sensitivity of the analysis.

WO2005/003743 discloses a device and methods wherein the fluorescence of an excited fluorophore label is coupled with the surface plasmon resonance present in a thin conductive film. The resulting surface plasmon-coupled emission (SPCE) occurs over a narrow angular distribution, converting isotropic fluorescence emission into easily collected directional emission.

It is also disclosed in WO2005/003743 that the use of patterned structures acting as gratings can also be used to provide larger angular differences across typical emission spectra. There is still a need in the art for devices and methods with improved sensitivity for detecting analytes in biochemical assays using surface plasmon-coupled emission.

SUMMARY OF THE INVENTION

It is an object of the present invention to provide methods and systems for detecting fluorescence in a grating-coupled surface plasmon resonance (SPR) device. It is an advantage of embodiments according to the present invention that systems and methods are provided allowing an increase of the fluorescence detection efficiency of grating-coupled SPR sensors of the prior art, as for example described in WO2005/003743. It is an advantage of embodiments according to the present invention that methods and systems are provided making good use of the advantage of grating coupled excitation light coupled from or to the plasmon for angles that would be beyond the critical angle for total internal reflection if no grating was used. The outcoupling directions that are newly created and assisted by the presence of the grating thereby may correspond to the first, second and higher diffraction orders of the grating. It is an advantage of embodiments according to the present invention that methods and systems are provided allowing to make good use of non-assisted outcoupling of plasmon energy. This mode may contain a significant part of the plasmon's total outcoupled energy, and it is an advantage of embodiments according to the present invention that detection is made possible, e.g. by avoiding total internal reflection at the substrate/air interface. In other words, it is an advantage of embodiments according to the present invention that it does less, little or not suffer from a reduction in detection efficiency of fluorescence light due to the existence of a non-assisted outcoupling mode of the plasmon energy.

The above objective is accomplished by a method and device according to the present invention.

The present invention relates to a device for detecting radiation emitted in a biological, chemical and/or biochemical assay using surface plasmon-coupled emission, the device comprising a conductive layer comprising a grating, the conductive layer being adapted for supporting a first plasmon having at least a substantial intensity, wherein said device is furthermore adapted for supporting grating assisted Plasmon emission and for suppressing non-grating assisted Plasmon emission. It is an advantage of embodiments according to the present invention that systems and methods are provided resulting in a good signal to noise ratio. It is an advantage of embodiments according to the present invention that systems and methods are provided having good efficiency. The ratio of the grating assisted Plasmon emission and the non-grating assisted Plasmon emission is at least 4 to 1, advantageously at least 10 to 1, more advantageously at least 20 to 1, still more advantageously at least 50 to 1, even more advantageously at least 100 to 1. The device may be furthermore adapted for avoiding non-grating assisted Plasmon emission. The device further may comprise a first, solid, medium having a first index of refraction $n_{first}$. The first plasmon may have the at least a substantial intensity at the surface of the conductive layer facing away from the first medium. The conductive layer and the first medium may be adapted for grating-assisted outcoupling of radiation. The effective refractive index $n_{eff}$ of the first plasmon may be higher than the first refractive index $n_{first}$. The plasmon thus may be evanescent on both the first medium side and the second medium side. The effective refractive index of the first Plasmon may be higher than the index of refraction of the first, solid, medium for at least one fluorescence wavelength, for at least one angle of incidence and/or for at least one period of the pattern. The first Plasmon having at least a substantial intensity at the surface of the conductive layer facing away from the first medium may have an intensity of at least 30% of the maximum intensity of the first Plasmon, advantageously at least 50% of the maximum intensity of the first Plasmon, more advantageously at least 70% of the maximum intensity or even more advantageously may have its maximum at the surface of the conductive layer facing away from the first medium.

The conductive layer and the first medium being adapted for grating-assisted outcoupling of radiation may comprise that the conductive layer and the first medium are adjacent each other or are separated by one or more intermediate layers having a total optical thickness smaller than half a wavelength. The total optical thickness may be smaller than half a wavelength of radiation within the range 300nm to 1500nm, e.g. smaller than half a wavelength of all radiation within the range 300nm to 1500nm. The total optical thickness may be smaller than e.g. 80nm.

The device further may comprise a layer comprising functional molecules capable of binding analyte molecules comprising one or more types of luminophores. It is an advantage of embodiments according to the present invention that these allow to selectively retain the analyte and its luminophore close to the surface of the layer of conductive material.

The device may comprise a layer of dielectric material contacting the surface of the layer of conductive material facing away from the first medium and having an optical thickness adapted in such a way that the first plasmon has an $n_{eff}$ higher than $n_{first}$. It is an advantage of embodiments according to the present invention that it provides an appropriate way of raising the effective refractive index of the Plasmon above the index of refraction of the first medium. It is an advantage of embodiments according to the present invention to reduce or suppress the quenching of the luminescence caused by the conductive layer. The optical thickness may be obtained by selecting a combination of an appropriate refractive index and an appropriate thickness.

The optical thickness of the dielectric layer may be between 5 nm and 80 nm. It is an advantage of embodiments of the present invention that the field enhancement experienced by the luminophore can be high.

The refractive index of the dielectric layer may be 1.4 or more. It is an advantage of embodiments according to the present invention that the field enhancement experienced by the luminophore can be high.

The first medium may have an optical thickness of 300 nm or more. It is an advantage of embodiments according to the present invention that the influence of other underlying layers such as for example a support can be reduced or suppressed. The effective refractive index $n_{eff}$ of the first plasmon may be lower than the effective refractive index $n_{eff}{}^{*}$ of the second plasmon wherein $n_{eff}{}^{*}$ may be defined as follow:

$$n_{eff}* = \sqrt{\frac{\varepsilon_m \varepsilon_{first}}{\varepsilon_m + \varepsilon_{first}}}$$ , with $\varepsilon_m$ being the complex dielectric constant of the layer of conductive material and $\varepsilon_{first}$

being the real dielectric constant of the first medium. It is an advantage of embodiments of the present invention that a good coupling between plasmons present on both sides of the layers of conductive material may be obtained.

The device further may comprise a radiation detector for detecting the radiation coupled out through the first medium.

The device further may comprise means for exciting luminescent centers near the conductive layer in order to generate the radiation.

The device may be an optical fiber. It is an advantage of embodiments according to the present invention that the device may be small and easily portable.

The present invention also relates to a method for detecting radiation in a biological, chemical or biochemical assay using surface plasmon-coupled emission, the method comprising contacting a device comprising a conductive layer with a sample fluid comprising an analyte, the analyte comprising a radiative center or being able to bind to a radiative center, causing the analyte to be adjacent to the surface of the device, supporting grating assisted Plasmon emission and suppressing non-grating assisted Plasmon emission representative of radiation of excited radiative centers using surface plasmon coupled emission and detecting said grating assisted plasmon emission. The ratio of the grating assisted Plasmon emission and the non-grating assisted Plasmon emission is at least 4 to 1, advantageously at least 10 to 1, more advantageously at least 20 to 1, still more advantageously at least 50 to 1, even more advantageously at least 100 to 1. The method may comprise avoiding non-grating assisted plasmon emission. The device thereby may comprise a first solid medium adapted for grating assisted outcoupling of radiation. The detecting may comprise detecting grating-assisted outcoupled radiation and detecting non-grating assisted outcoupled radiation, coupled out using a first plasmon having an effective refractive index higher than the refractive index of the first solid medium.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

BRIEF DESCRIPTION OF THE DRAWINGS

Fig.1 is a vertical cross-section of a device according to an embodiment of the present invention.

Fig.2 is a graph of $n_{eff}$ versus the $TiO_2$ film thickness.

Fig.3 is a graph of $k_{eff}$ versus the $TiO_2$ film thickness.

Fig.4 and Fig.5 are graphs of examples of the field intensity across a device according to embodiments of the present invention.

Fig.6 is a graph of the power versus the grating period as simulated for a device according to the prior art.

Fig.7 is a graph of the power versus the grating period as simulated for a device according to an embodiment of the present invention.

Fig.8 is a vertical cross-section of a device according to an embodiment of the present invention.

Fig.9 is a graph of $n_{eff}$ versus $n_{first}$.

Fig.10 is a graph of $k_{eff}$ versus $n_{first}$.

Fig.11 is a vertical cross-section of a device according to an embodiment of the present invention.

Fig.12 is a graph of $n_{eff}$ vs the $TiO_2$ film thickness for devices comprising an intermediate $TiO_2$ layer between the conductive layer and the first medium.

Fig.13 is a graph of $k_{eff}$ vs the $TiO_2$ film thickness for devices comprising an intermediate $TiO_2$ layer between the conductive layer and the first medium.

Fig.14 is a graph of $n_{eff}$ vs the $TiO_2$ film thickness for devices comprising an intermediate $TiO_2$ layer between the conductive layer and the first medium.

Fig.15 is a graph of $k_{eff}$ vs the $TiO_2$ film thickness for devices comprising an intermediate $TiO_2$ layer between the conductive layer and the first medium.

In the different figures, the same reference signs refer to the same or analogous elements.

DETAILED DESCRIPTION OF EMBODIMENTS

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes.

Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a device for detecting an analyte via radiation, e.g. the light emitted by a luminophore, in a chemical, biological and/or biochemical assay. The latter may be performed using surface plasmon-coupled emission. The device for detecting may comprise a first medium having a first index of refraction $n_{first}$ and being a solid medium. The first medium may for example be a substrate. The device according to embodiments of the present invention comprises a layer of conductive material comprising a grating, e.g. a periodic pattern, wherein a first plasmon is supported. The device may be adapted so that the first Plasmon has at least a substantial intensity contribution at the surface of the layer of conductive material facing away from the first medium. The substantial intensity contribution may for example be having an intensity at the surface of at least 30% of the maximum intensity of the first Plasmon, advantageously at least 50% of the maximum intensity of the first Plasmon, more advantageously at least 70% of the maximum intensity of the first Plasmon, or still more advantageously the first Plasmon may have its intensity peaking at the surface. A high intensity at the surface may allow a strong coupling between the Plasmon and the fluorophores present at the sensing surface.

According to embodiments of the present invention, the device may be adapted for supporting grating assisted Plasmon emission and for suppressing non-grating assisted Plasmon emission. The non-grating assisted Plasmon emission may be suppressed so that the ratio of the grating assisted Plasmon emission and the non-grating assisted

Plasmon emission is at least 4 to 1, advantageously at least 10 to 1, more advantageously at least 20 to 1, still more advantageously at least 50 to 1, even more advantageously at least 100 to 1. In particular embodiments, the non-grating assisted Plasmon emission may even be avoided. It is an advantage of embodiments according to the present invention that the background radiation resulting in noise can be substantially suppressed. According to some embodiments of the present invention, the conductive layer and the first medium are adapted for grating-assisted outcoupling of radiation, based on surface plasmon-coupled emission. The conductive layer and the first medium may be adjacent or are separated by one or more intermediate layers. Optionally, the one or more intermediate layers may have a total thickness of 80nm or less. According to some embodiments of the present invention, the effective refractive index $n_{eff}$ of the first plasmon is higher than the first refractive index $n_{first}$ of the first medium. This requirement may be fulfilled for at least one radiative wavelength for which the system may be used, e.g. a wavelength in the range 300 nm to 1500 nm. The wavelength range may be for example the optical regime generally used for fluorescently labeled detection, e.g. the range wherein most existing fluorophores emit and wherein conventional fluorescence detectors are sensitive. The refractive index condition may be fulfilled for at least one angle of incidence and/or for at least one period of a grating, e.g. periodic structure. A predetermined combination of the angle of incidence, the period of the grating and the refractive index of the Plasmon may be selected. Such a selection may be made as function of the coupling efficiency between the light and a Plasmon mode.

A first medium suitable for being used in embodiments of the present invention can comprise, for example, one or more of the following materials : glass (e.g. a glass plate), silica (e.g. a silica substrate), a polymer (e.g. a polymethylmethacrylate substrate), or a prism made of one or more such materials. The first medium is advantageously sufficiently transparent to wavelength (s) of radiation emitted by radiative centers such as for example light emitted by fluorophore molecules. Advantageously the first medium has a transmitance of 80% or more for at least one wavelength (s) of radiation emitted by radiative centers within or coupled to analytes to be detected, more advantageously 90% or more. The first medium is a solid medium. It may act as a substrate and provide strength to the device. The substrate advantageously is suitable for supporting a layer of conductive material.

A layer of conductive material suitable for being used in embodiments of the present invention may comprise, for example, one or more of the following materials: metal such as silver, gold, aluminum, copper, or the like, conductive polymers, etc. The deposition of such a layer can be performed by any method well known to the person skilled in the art such as vapor deposition, chemical vapor deposition (CVD), sputtering, electroless plating and photoreduction among others. The conductive layer or layer of conductive material supports a first plasmon having at least a substantial intensity contribution at the surface of the conductive layer facing away from the first medium. The first Plasmon may be caused by an interference of one Plasmon at a first surface of the conductive material and a second Plasmon at the other surface of the conductive material. The first Plasmon of interest advantageously has an intensity profile that has at least a substantial intensity contribution at the surface of the conductive layer facing away from the first medium, which may be considered as the sensing surface. It may peak at that surface, have a maximum intensity at that surface or even peak at both surfaces of the conductive layer as long as the contribution at the sensing surface is substantially high, so that a sufficient coupling between the Plasmon and the luminophores that will be sensed thereon is possible. The effective refractive index of the first plasmon thereby is higher than the first refractive index. The layer of conductive material comprises a grating, e.g. a periodic pattern. Such periodic patterns are well known to the person skilled in art and can for instance be as described in WO2005/003743, the present invention not being limited thereto. For instance, the layer of conductive material may comprise a plurality of apertures arranged in the conductive material. The apertures can have a substantially uniform size, for example, and can be arranged in a predetermined pattern, such as two-dimensional pattern in the form of a triangular array pattern, a square array pattern, a hexagonal array pattern, a rectangular array pattern, or other suitable pattern. As another example, the layer of conductive material may comprise a plurality of islands conductive material, such as ring-shaped regions, arranged in a predetermined pattern, such as a two dimensional pattern. Ring-shaped regions in this regard are intended to mean annular structures of any suitable shape (e. g. squares, circles, rectangles, triangles and polygons among others) with or without pointed intersection points, and are not limited to circular structures. The periodic pattern may also be a simpler grating comprising bars made of the conductive material separated by voids. The periodic structure makes it possible to excite plasmon in metallic gratings from air, e.g. it becomes possible to couple fluorescence light to the plasmon for angles that are no longer beyond the critical angle. Additionally, the use of patterned structures as described herein can be beneficial because such structures can have light filtering properties. Such light filtering properties of patterned films (or more generally, photonic structures) are known to those of ordinary skill in the art. By using patterned layers of conductive material as described herein, the patterned layers can be designed to transmit radiation of wavelengths of Surface plasmon-coupled emission (SPCE) from radiative centers of interest, e.g. luminophores, and to attenuate radiation of other wavelengths. Thus, such patterned layers can provide for further suppression of background emission and background noise. The optical properties of the patterned structure (e.g. the wavelength or wavelength range that can pass through a patterned conductive film) depends upon both characteristic dimensions of the periodic features such as for example the aperture size (e. g. diameter) and the spacing between apertures, as known to those in the art. Selection of appropriate aperture sizes and/or spacing to achieve a desired optical properties (e.g. filtering characteristic) is within the capability of one of ordinary skill in the art either based on existing mathematical treatments or by empirical approaches (e. g. by making test films of various configurations and measuring their properties to then determine appropriate parameters). Another advantage of using patterned structures acting as gratings is that they permit to provide larger angular differences across typical emission spectra. In embodiments of the present invention, the grating period is advantageously chosen in order to detect the plasmon outcoupling at an angle comprised between 0° and 37° towards the normal (e.g. corresponding to a numerical aperture <0.6. For example, periodic silver surfaces could be used since such surfaces can facilitate emission by nearby radiative centers such as fluorophores.

Two mathematical relations are important for the optimum design of a periodic pattern-coupled surface plasmon resonance (SPR) sensor. The first is the equation describing diffraction of radiation on a periodic pattern:

$$k_0 n_1 \sin\theta_1 \pm mk_G = \pm k_0 n_2 \sin\theta_2 \qquad (1)$$

wherein $k_0$ is the magnitude of the propagation constant (also called wavevector) in vacuum of the incoming light wave, m is the order of the diffraction, $k_G$ is the magnitude of the wavevector of the periodic pattern (e.g. grating), $n_1$ is the refractive index of the light incidence medium, $\theta_1$ is the angle of incidence, $n_2$ is the refractive index of the medium in which the light is refracted, and $\theta_2$ is the diffraction angle. The second equation describes the relation between the wavevector in the incidence medium and the plasmon's k-vector:

$$k_2 \sin\theta_2 = k_{SP}$$
$$k_0 n_2 \sin\theta_2 = k_0 n_{eff} \qquad (2)$$

where $n_{eff}$ is the effective refractive index of the plasmon present at the surface of the layer of conductive material facing away from the first medium. The right side of Eq. 1 equals the left side of Eq. 2 so that both equations can be combined as:

$$n_1 \sin\theta_1 + \frac{\lambda}{\Lambda} = n_{eff} \qquad (3)$$

This equation describes the excitation of a plasmon mode via the first order diffracted light of a dielectric grating. It gives the relationship between the plasmon's effective refractive index $n_{eff}$, the wavelength of the incident light $\lambda$, the period of the grating $\Lambda$ and the angle of incidence $\theta_1$. This equation does not reveal any information, though, about the efficiency of the diffraction into different orders, nor about the efficiency of coupling to the plasmon. These can be optimized by means of the grating parameters (depth, period, shape) and the thickness of the conductive material.

For illustrative purposes only, lets consider the case of device according to the prior art wherein the surface plasmon mode has an effective index below the index of the substrate. In general, in a molecular biosensing module, the second medium (superstrate) is a biological liquid with a refractive index close to that of water (n = 1.33). The metal layer is typically gold ($n = 0.177 + i*3.077$ at 633 nm) or silver ($n = 0.136 + i*4.018$ at 633 nm), and the substrate is often glass (n = 1.51). The plasmon on a gold/water interface has an effective refractive index of 1.47, which is lower than the refractive index of the glass substrate: $n_{eff} < n_{sub}$. In this case, the there is not only grating assisted coupling to the substrate (this can for instance account for 20 % of the total power coupled out of the plasmon) but also non-grating assisted coupling to the substrate (this can for instance account for 80 % of the total power coupled out of the plasmon) and as a consequence only 20 % of the power coupled out of the surface plasmon can be detected. Embodiments according to the present invention assist in using such grating-coupled plasmon emission while further optimizing outcoupling of radiation not coupled out in a grating-assisted way, as will be described in more detail later.

In an embodiment of the present invention, the device may further comprise a layer comprising functional molecules. The functional molecules are advantageously capable of binding analyte molecules comprising one or more types of luminophores. In an embodiment of the present invention, the functional molecules envisaged within the context of the present invention include biologically-active moieties such as but not limited to whole anti-bodies, antibody fragments such as Fab' fragments, single chain Fv, single variable domains, VHH, heavy chain antibodies, peptides, epitopes, membrane receptors or any type of receptor or a portion thereof, substrate-trapping enzyme mutants, whole antigenic molecules (haptens) or antigenic fragments, oligopeptides, oligonucleotides, mimitopes, nucleic acids and/or mixture thereof, capable of selectively binding to a potential analyte. Antibodies can be raised to non-proteinaceous compounds as well as to proteins or peptides. Probes may be members of immunoreactive or affinity reactive members of binding-pairs. The nature of the probe will be determined by the nature of the analyte to be detected. Most commonly, the probe is developed based on a specific interaction with the analyte such as, but not limited to, antigen-antibody binding, complementary nucleotide sequences, carbohydrate-lectin, complementary peptide sequences, ligand-receptor, coenzyme, enzyme inhibitors-enzyme, etc. In the present invention, the function of a probe may be to specifically interact with an analyte to permit its detection. Therefore, probes may be labelled or may be directly or indirectly detectable. The probe can be an anti-analyte antibody if, for instance, the analyte is a protein. Alternatively, the probe can be a complementary oligonucleotide sequence if, for instance, the analyte is a nucleotide sequence. The layer comprising functional molecules may also comprise a combination of two or more of these functional molecules. The layer comprising functional molecules is advantageously placed on top of the device, e.g. adjacent to the surface of the layer of conductive material facing away from the first medium or adjacent to the surface of the dielectric layer facing away from the first medium.

In an embodiment of the present invention, the layer comprising functional molecules may comprises a plurality of functional regions, the functional regions being separated from one another laterally and being arranged in a predetermined pattern on the layer of conductive material or on an additional dielectric layer, at least some of the plurality of functional regions comprising functional molecules that are different from functional molecules of other ones of the plurality of functional regions. In embodiments of the present invention, the layer comprising functional molecules may be configured to position radiative centers within about 5 to 500 nm of the layer of conductive material.

The term "analyte", as used herein, refers to a substance whose presence, absence, or concentration is to be determined by using embodiments of the present invention. Analytes may include, but are not limited to organic molecules, metabolites such as glucose or ethanol, proteins, peptides, nucleic acid segments, molecules such as pharmaceuticals, antibiotics or drugs, drugs of abuse, molecules with a regulatory effect in enzymatic processes such as promoters, activators, inhibitors, or cofactors, viruses, bacteria, cells, cell components, cell membranes, spores, DNA, RNA, microorganisms and fragments and products thereof, or any substance for which attachment sites, binding members or receptors (such as antibodies) can be developed.

The term "radiative center", as used herin and unless provided otherwise, refers to any suitable radiating center, such as e.g. a radiative molecule, particle or cluster capable of generating, emitting or modulating an electromagnetic signal. It encompasses amongst others "luminophores", as used herein and unless provided otherwise, referring to any suitable light emitting molecule, particle, or cluster capable of generating a detectable electromagnetic signal or capable of binding to another molecule or forming a complex which generates a detectable electromagnetic signal. Suitable luminophores for use in different detection systems and methods of the present invention are numerous and extensively described in the art. Those luminophores (e.g. luminescent molecules) are agents such as but not limited to fluorescent agents, phosphorescent agents, chemiluminescent agents, bioluminescent agents and the like. They includes, but are not limited to, fluorscein and other conventional light emitting molecules known in the art, semiconductor particles and clusters that can emit light in narrow wavelength bands, e.g., GaAs, and other luminescent nanoparticles.

The luminophore used in the methods of the present invention may be an analyte-specific luminophore, i.e. capable of binding specifically to the analyte. Nevertheless, it is also envisaged that where the analyte is present in a purified form, it is sufficient that the luminophore binds to the analyte.

According to embodiments of the present invention, the conductive layer and the first medium are adapted for allowing grating-assisted outcoupling of radiation, based on surface plasmon-coupled emission. The conductive layer and the first medium may be adjacent or are separated by one or more intermediate layers totaling an optical thickness of half a wavelength (for example, 80 nm of $TiO_2$ for light with a wavelength of 633 nm in vacuum) or less. When the intermediate layers are substantially thicker in optical thickness, they may start acting as wave guide and thus the radiation to be coupled out would not be coupled out anymore but propagated in the intermediate layers.

According to embodiments of the present invention, the effective refractive index $n_{eff}$ of the first plasmon is higher than the first refractive index $n_{first}$ of the first medium. This requirement may be fulfilled for at least one radiative wavelength for which the system may be used, e.g. a wavelength in the range 300 nm to 1500 nm. The refractive index condition may be fulfilled for at least one angle of incidence and/or for at least one period of a grating, e.g. periodic structure. By fulfilling the above identified refractive index condition, light that is not coupled out by assisted grating-coupling still can be avoided from being lost due to total internal reflection. Advantageously, in an embodiment of the present invention, the plasmon on the sensing surface may have an $n_{eff}$ that is in between $n_{sub}$ and the effective refractive index $n_{eff}{}^*$ of the plasmon on the metal/substrate side. The latter can be estimated from the following equation for an interface between a semi-infinite metal (with complex dielectric constant $\varepsilon_m$) and a semi-infinite substrate (with real dielectric constant $\varepsilon_{sub}$):

$$n_{eff}* = \sqrt{\frac{\varepsilon_m \varepsilon_{sub}}{\varepsilon_m + \varepsilon_{sub}}} \qquad (4)$$

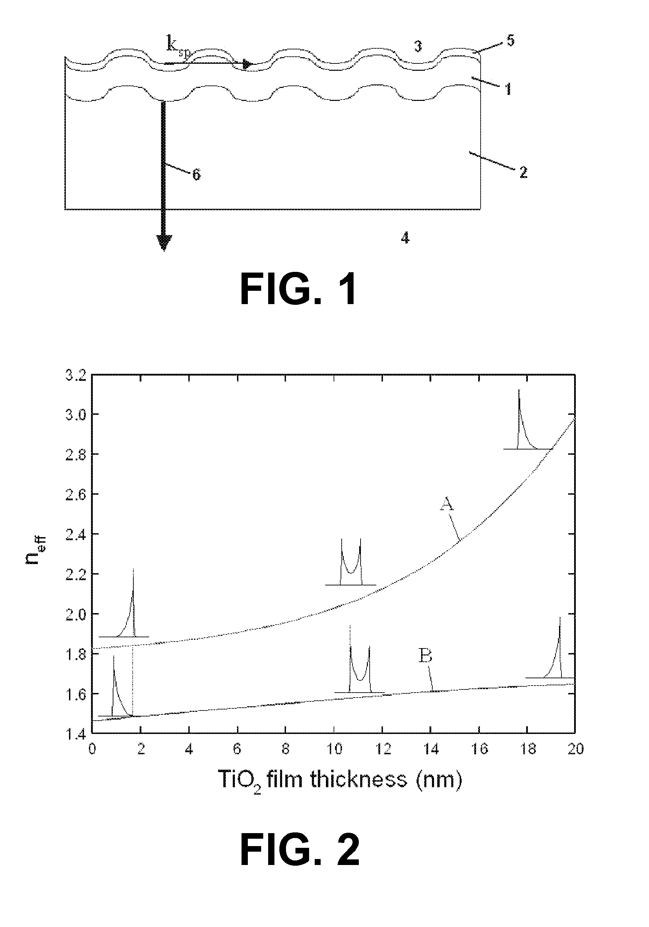

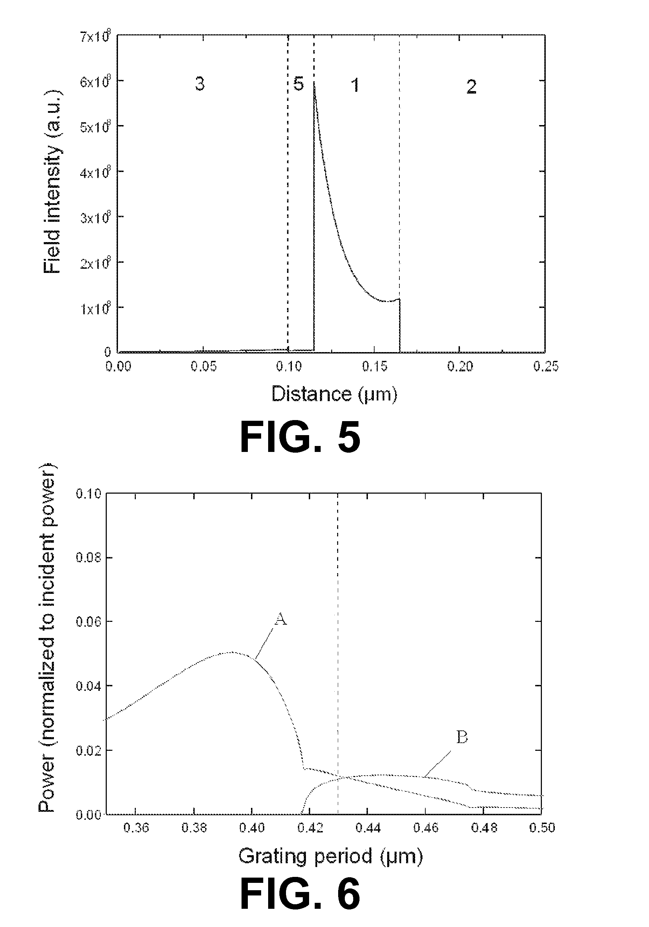

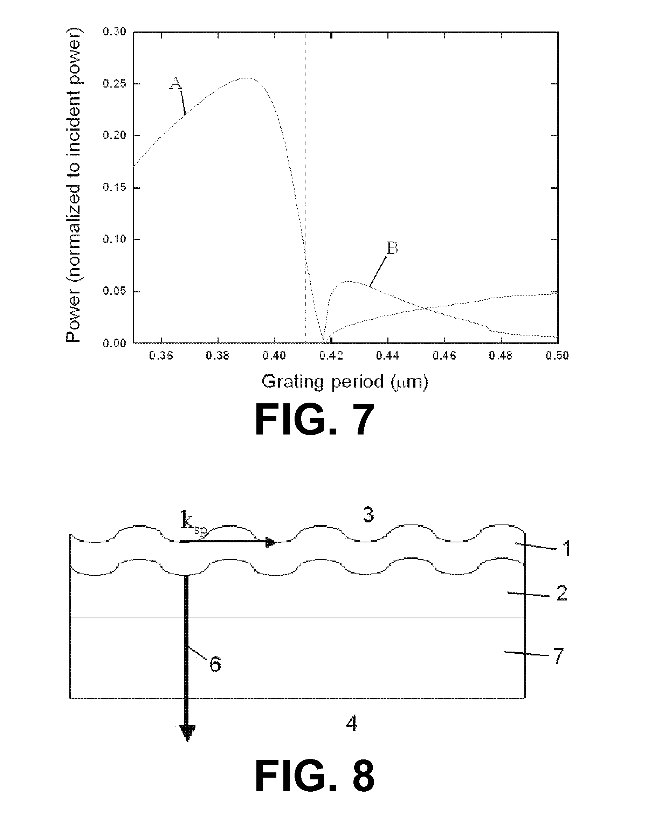

The above equation may advantageously be used for selected examples where the layer thicknesses are selected appropriately, resulting in plasmon modes showing one peak in the intensity profile. When considering thin metal films, Plasmon modes having more than one intensity peak may occur, due to coupling/interaction between plasmons at the two metal dielectric interfaces on either side of the thin metal film, resulting in a less appropriate use of equation (4). A more rigorous approach, taking into account that the interface cannot be considered as an interface between semi-infinite materials, may be based on an optical simulation, as used for example for Figs 2 to 5 and 9 to 10 and 12 to 15, based on Maxwell equations solved for layered stacks of different media. Another approach, as used in Figs 6 and 7, is using GSolver which is a modelling program based on Rigorous Coupled Wave Analysis of a grating. By way of illustration, the present invention not being limited thereto, a plurality of exemplary embodiments will be further discussed in detail below.

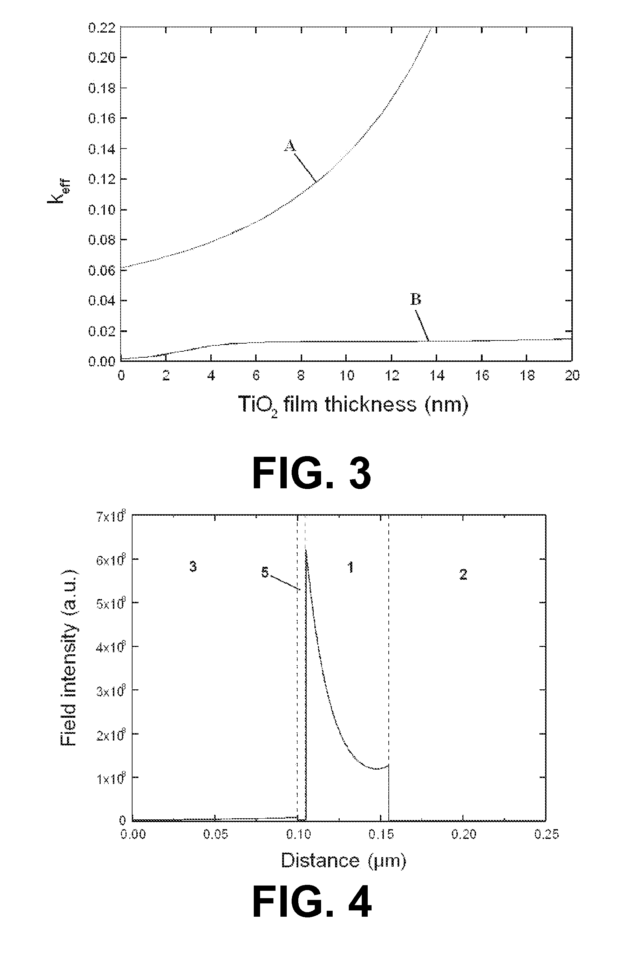

In a first exemplary embodiment of the present invention (see Fig.1), a layer of dielectric material **5** is deposited on top of the layer of conductive material **1**, and separates it from a second medium **3** (e.g. a biological sample fluid, a polymer solution or air) having a second index of refraction. The refractive index and the thickness of the layer of dielectric material **5** is adapted in such a way that the effective refractive index of the plasmon present at the conductive layer **1** facing away from the first medium **2** increases to a value above the refractive index $n_{first}$ of the first medium. In Fig.1, $k_{sp}$ is the momentum in the direction parallel to the metal surface, the arrow **6** represent the grating-assisted outcoupling and 4 is air. Generally speaking, the smaller the refractive index of the dielectric film is, the thicker the dielectric layer must be to push $n_{eff}$ to a value larger than $n_{first}$; there is a limit to the real refractive index because the radiative centres will experience a reduced field enhancement with too high thickness. For example with a real refractive index of about 1.4 and a layer thickess of 80nm, the radiative centers will experience a field enhancement reduced by 60% or more with respect to the field enhancement as shown in Fig.4. Advantageously, the refractive index of the added film may be 1.7 or more, which ensures a reduction of the field enhancement of less than 30%. Even more advantageously, the refractive index is even higher (e.g. n = 2.8), and the layer thickness is as small as possible. An advantageous lower limit for the real refractive index of the added film, is the refractive index of the first medium. A reason for this preference is that as the real part of the effective refractive index of the plasmon mode is above the refractive index of the substrate, the plasmon mode will be evanescent in the added dielectric layer if the refractive index of the added dielectric layer is lower than the refractive index of the first medium. This evanescent decay in the added dielectric layer, would result in a reduction of field enhancement at the added layer - water interface, which is not preferred. More advantageously, the refractive index of the added dielectric layer is such that the resulting effective refractive index of the plasmon mode is below the index of the added layer.

The thickness, e.g. physical thickness, of the dielectric layer 5 is advantageously 80 nm or less, more advantageously 40 nm or less, even more advantageously 20 nm or less, most advantageously 15 nm or less. The thickness of the dielectric layer is advantageously 5nm or more. The refractive index of the dielectric layer 5 is advantageously 1.4 or more, more advantageously 1.7 or more, most advantageously 2.0 or more. The thickness of the dielectric layer may be such that the Plasmonic field experienced by the luminophores is high, thereby taking into account that the plasmonic field falls off exponentially as function of the distance from the surface. This first exemplary embodiment is advantageous because in addition to increase $n_{eff}$ above $n_{first}$, it is easy to implement, and the dielectric layer may help to reduce quenching of the fluorescence by the metal. Examples of suitable dielectric layers comprise but are not limited to $TiO_2$, $Ta_2O_5$, $Nb_2O_5$, $ZrO_2$, $ZnO$, $ZnS$, $Si_3N_4$ or $HfO_2$ among others. The dielectric layer may be deposited by any method know from the person skilled in the art such as but not limited to CVD, Sputtering, wet processing (e.g. spin coating, drop-casting and dip coating among others), epitaxial growth, printing, among others. In an embodiment of the present invention, the dielectric material is obtained via a sol-gel processing and deposited as a layer via a wet coating process.

By way of illustration a number of examples for this first particular embodiments are discussed below. In the different drawings often different Plasmon modes are shown. The Plasmon mode of interest is the Plasmon mode having at least a substantial contribution at the surface of the conductive layer facing away from the first medium, i.e. at the sensing surface. In the different inserts the intensity profile of the Plasmon mode is illustrated.

Example 1:

On a glass substrate **2** covered by a 50 nm thick gold film **1**, a $TiO_2$ dielectric layer **5** (n=2.8) is deposited. Fig. 2 shows a simulation of the real part of the plasmon's effective refractive index as a function of the $TiO_2$ film thickness (with the second medium **3** being water, n = 1.33). Fig.3 shows the imaginary part of this same effective refractive index. Note that not only the plasmon at the $Au/TiO_2$ interface (which also penetrates into the second medium (e.g. an aqueous sample fluid), but also the plasmon at the Au/substrate interface is included in the plot: coupling between the two plasmon modes occurs and reaches a maximum (where the intensities at the interfaces of the gold layer with the $TiO_2$ and substrate layers are identical) for a $TiO_2$ thickness of approximately 15 nm. Schematic drawings of the plasmon mode profile are included in Fig.2, to clarify the simulation results. For biosensing applications, the thickness of the dielectric layer is advantageously such that the plasmon mode at the interface with the second medium (e.g. the sample fluid) has a high intensity. In Fig.2, the plasmon profiles are schematically shown with the interface metal/second medium on the left of the profiles. It is also advantageous that the plasmon has a low imaginary part of the refractive index, indicating less attenuation due to, among others, less absorption of energy. In Fig.2, the simulated plasmon showed at the bottom of Fig.2 is advantageous to the simulated plasmon showed on the top of Fig.2. The drawing indicates two different Plasmon modes (curve A and curve B) occurring in the thin film. For these Plasmon modes, the different inserts show the intensity profile of the Plasmons as function of different thicknesses of the $TiO_2$ layer. It can be seen that depending on the thickness of the $TiO_2$ layer, the intensity profile indicates either a single peak or two peaks. Plasmon modes that can be used advantageously are those Plasmon modes having a substantial intensity contribution at the sensing surface. In this example, the thickness of the $TiO_2$ dielectric layer is advantageously between 5 and 15 nm. For a thickness inferior to 5 nm, the plasmon has a $n_{eff}$ inferior to $n_{first}$, wherein $n_{first}$ is the refractive index of the first medium **2**. For $TiO_2$ film thicknesses above 15 nm, the field enhancement on the sensing surface of the Au is negatively affected by the coupling between the plasmon modes on the two sides of the Au film, i.e. by the coupling between the first plasmon present at the surface of the layer of conductive material **1** facing away from the first medium **2** and the second plasmon present at the surface of the layer of conductive material **1** facing the first medium **2**. Fig.4 shows a simulation for a plasmon at the sensing surface of a device according to the first exemplary embodiment of the present invention. The $TiO_2$ layer **5** is 5 nm thick. Generally speaking, taking into account the fact that the coupling between two modes is optimum for phase matching between the modes, i.e. real parts of the effective indexes of the modes, one can set a more generalized criterion for the best choice of the effective index of the plasmon on the side of the second medium **3**. Advantageously, in an embodiment of the present invention, the plasmon on the sensing surface has an $n_{eff}$ that is in between $n_{first}$ and the effective refractive index $n_{eff}^*$ of the plasmon on the metal/substrate side. For a gold/glass interface: $n_{eff}^* \approx 1.73$.

Example 2:

On a BK7 glasssubstrate **2**, borosilicate glass as obtainable from Schott, covered by a 50nm thick gold film **1**, a 15nm thick dielectric sol-gel layer **5** having a refractive index of 1.7 is deposited via spincoating. The added dielectric film results in a plasmon effective refractive index of 1.52 for the first plasmon, which is higher than the refractive index of BK7 glass (n = 1.51); the profile of this plasmon is shown in Fig.5.
BK7™ is a borosilicate glass from Schott.

Example 3:

In order to estimate the gain in fluorescence detection efficiency that can be reached with a device according to the first exemplary embodiment of the present invention, a device as described in example 1 was compared to a device of the prior art, i.e. not having a dielectric layer between the layer of conductive material and the second medium and wherein therefore $n_{eff}$ is lower than $n_{first}$. The gain in fluorescence detection efficiency is the ratio between the grating-assisted outcoupling of plasmon energy and the non-assisted outcoupling. For this comparison the transmission of light through an Au grating was stimulated, where the light is incident from the sample-side (simulated as water): the grating-assisted outcoupling is an estimate obtained from the zeroth-order transmission of normally-incident light, after correction for the direct transmission, and the non-assisted plasmon outcoupling is the first order plus the minus first order transmission. The results are shown in Figs 6 and 7. The following parameters were chosen for these simulations:

- incident light 633 nm (in vacuum), normally incident ($\theta = 0°$) from the second medium,
- second medium is water (n = 1.33)
- substrate is BK7 glass (n = 1.51)
- 50-nm-thick Au grating
- grating parameters: duty cycle (i.e. ratio between the bar width to the period) 50%, depth = 20 nm, the grating period was varied.

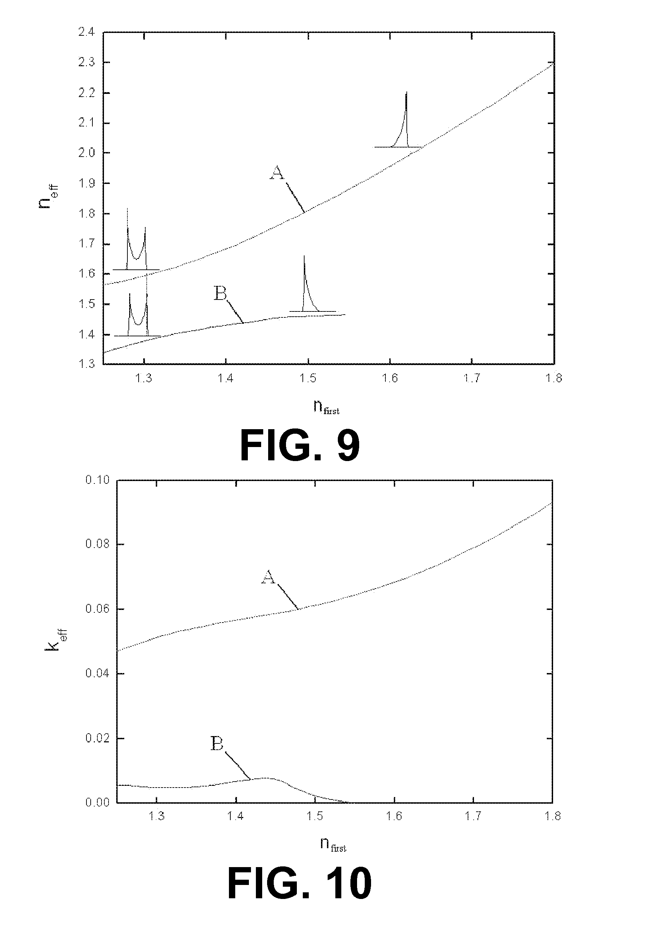

Fig.6 shows the results obtained with the device of the prior art, i.e. not having a dielectric layer on top of the layer of conductive material. Fig.7 shows the results obtained when a 7nm thick $TiO_2$ film is on top of the layer of conductive material (here gold), i.e. between the metal layer and the second medium. Results from the left plot, with a grating period of 430nm, are compared with the results from the right plot, with a grating period of 411nm. These grating periods were chosen because they are optimized to match the plasmon's effective refractive index (1.47 and 1.54 for the devices of Fig.6 and Fig.7 respectively) in each of the devices, using equation 3 (with $\lambda = 633$ nm and $\theta_1 = 0°$). The simulations show that without use of a $TiO_2$ film, the non-assisted plasmon outcoupling contains approximately 50% of the light. A clear improvement is obtained when using a 7-nm thick $TiO_2$ film, which results in all the plasmon energy in the grating-assisted outcoupling direction.
In a second exemplary embodiment of the present invention (see Fig.8) the first medium **2** is selected in such a way that its refractive index $n_{first}$ is lower than the effective refractive index of the plasmon present at the surface of the layer of conductive material **1** facing away from the first medium **2**. In an embodiment of this second exemplary embodiment, the first medium may form a layer on a support **7**. Advantageously, the thickness of the first medium is large enough to reduce and advantageously to suppress the influence of the support. This is advantageous as it permits to use a cheap support, such as e.g. a thin glass plate, and deposite a thick dielectric layer with a refractive index n < $n_{eff}$, on top of it.
The refractive index of the first medium does not only affect the first plasmon outcoupling direction, but also its effective refractive index. This is simulated in Fig.9 for a configuration similar to example 3 but for various first medium having different refractive index $n_{first}$, and wherein the substrate is assumed to be semi-infinite. Just like in the first exemplary embodiment, it is preferred to optimize the system for the B curve in Fig.9 (and not the A curve), because of its lower imaginary part of the refractive index. The plots in Fig.9 illustrate that the first plasmon's $n_{eff}$ decreases slower than the first medium's $n_{first}$. The optimized refractive index is between 1.33 and 1.45:

- for $n_{first}$ < 1.33 the field enhancement on the sensing surface of the Au was negatively affected by the coupling between the plasmon modes on the two sides of the Au film;
- for $n_{first}$ > 1.45 we reached the situation where $n_{eff}$ < $n_{first}$.

In an embodiment according to the present invention, the refractive index of the first medium is larger than the refractive index of the second medium. The second medium being often an aqueous media, the refractive index of the first medium is advantageously 1.33 or more. Advantageously, the refractive index of the first medium is lower than $n_{eff}$. This will generally be true for refractive index of 1.45 or less. Suitable Low refractive index materials include $SiO_2$, MgF and LiF among others. Other low refractive index materials are porous materials. Such materials can be readily prepared e.g. by using sol-gel methods well known to the person skilled in the art. The thickness of the first medium is advantageously such that the underlying support, if present, has only a negligible or null effect on the the plasmon outcoupling. For instance, the thickness of the first medium can be chosen larger than the wavelength of the light emitted by the luminophore. Advantageously, the thickness of the first medium is 250 nm or more, more advantageously, 300 nm or more, still more advantageously, 350 nm or more, even more advantageously, 400 nm or more and most advantageously 1 $\mu$m or more. Note that Fabry-Parot interferences can occur in case of a very well defined layer thickness and very flat interfaces. In practice though, such interferences will not easily occur: by using for example a glass microscope slide as a substrate, the interface is already too rough to see significant interference effects. However, if Fabry-Perot interferences do occur, then the first medium thickness must be optimized such that the outcoupled fluorescence undergoes constructive interference.

Comparative example:

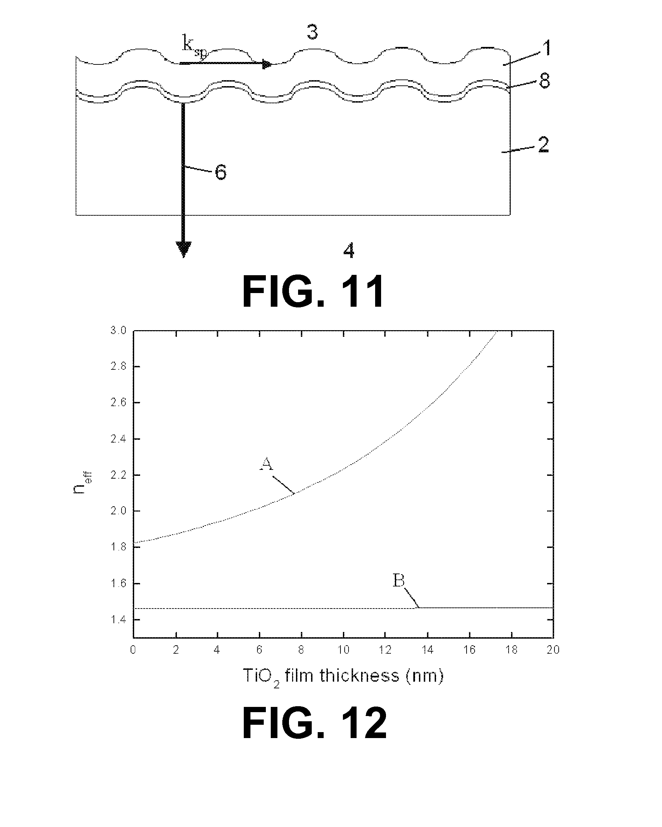

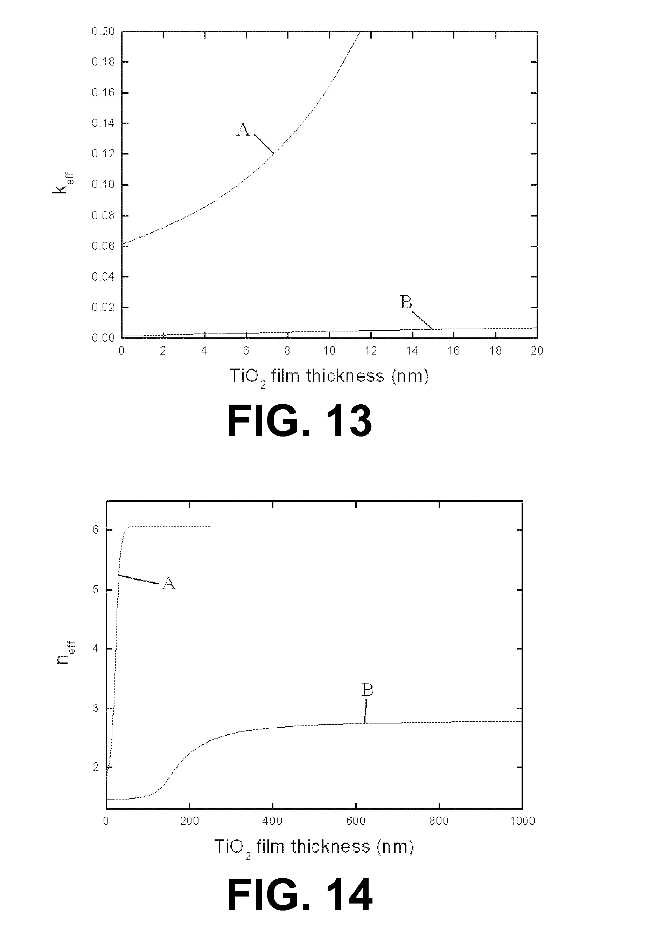

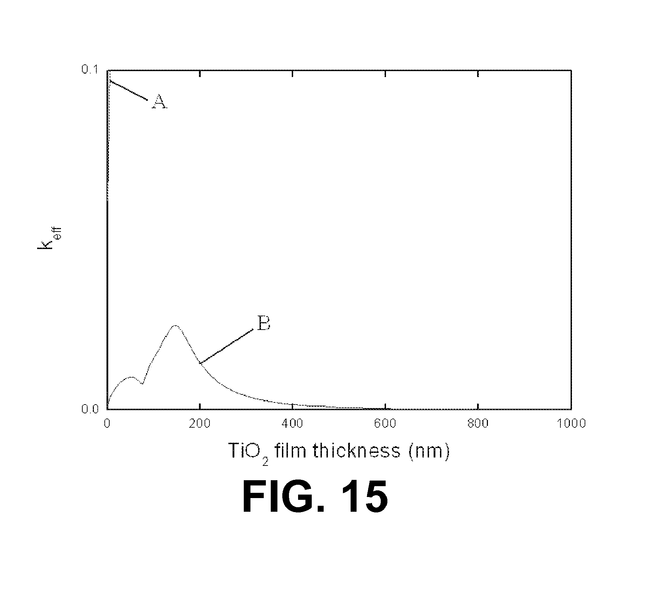

For example in example 3, the advantage conferred by embodiments according to the present invention, i.e. substrates wherein $n_{eff}$ is larger than $n_{first}$ was already shown. In the present comparative example, it is shown how a thick intermediate layer between the conductive layer and the first medium can have a detrimental effect on the outcoupling between the light emitted by the luminophore and the first plasmon. Reference is made to the situation shown in Fig. 11 and to the simulations displayed in Figs. 12 to 15. As it is demonstrated by curve B in Figs. 12 and 13, a thin layer of $TiO_2$ between the Au film and the substrate does not significantly affect the effective refractive index of the plasmon at the sensing surface. Curve B is not significantly affected by the presence of the $TiO_2$ layer. It is to be noticed that curve A represents a Plasmon mode less or not of interest as it has almost no intensity at the sensing surface. Thus, a layer of $TiO_2$ up to 90 nm is not sufficient to increase the plasmon's $n_{eff}$ to a value $\geq$1.51. Although not sufficient, it did not prevent $n_{eff}$ to be raised by other additional means such as the addition of a dielectric layer above the conductive layer as discussed in the first exemplary embodiment of the present invention or a selection of a first medium having a low $n_{eff}$ as discussed in the second exemplary embodiment of the present invention. For thicker $TiO_2$ layers, the plasmon's $n_{eff}$ can increase to larger values, as shown in Figs. 14 and 15. However, at large optical thickness of the intermediate layer of high refractive index material, e.g. more than half a wavelength of typical radiation that may be used, the layer starts to act as a waveguide. It captures light and guides it in the film, which is undesirable, because it will not reach the detector.

In an embodiment of the present invention, additional layers (e.g. high refractive index layer(s)) between the fist medium and the layer of conductive material may be added. Advantageously, the total optical thickness of the intermediate layer is limited. It advantageously does not exceed half the wavelength of the radiation used. It is noteworthy that a situation wherein the refractive index of the additional layer is lower than the refractive index of the first medium can be regarded as an equivalent to a situation where the additional layer is considered as the first medium.

In a further exemplary embodiment of the present invention, the refractive index of the second medium can be raised in order to increase $n_{eff}$. This can be achieved by adding additives such as e.g. polymers or solvents in the second medium (e.g. in the sample fluid). Examples of suitable polymers are hydrophilic polymers such as e.g. polyethylene glycol among others. Examples of suitable solvents are alcohols, dioxane or glycerine among others.

In an embodiment of the present invention, the device may comprise a glass prism, a glass plate present as a first medium or as a support for a first medium, and an index matching fluid having substantially the same index of refraction as the glass prism and the glass plate, the index matching fluid being disposed between the glass prism and glass plate.

In an embodiment of the present invention, the device may further comprise a radiation detector for detecting the radiation of the radiative centers, e.g. the light emitted by one or more luminophores. The radiation detector is advantageously arranged to selectively detect emitted radiation that is generated by excited radiative centers, e.g. excited fluorophores. The detector is advantageously arranged to collect emitted radiation over a predetermined angular range relative to a surface of the first medium, the emitted radiation emanating from the layer of conductive material at the surface plasmon angle for an emission wavelength of the excited radiative centres relative to a surface of the layer of conductive material and passing through the first medium before being detected by the detector, the predetermined angular range comprising the surface plasmon angle for the emission wavelength of the excited radiative centres.

Optionally, the detector can selectively detects radiation from individual functional region.

In an embodiment of the present invention, the device may further comprise a focusing element (e.g. a lens) that receives a hollow cone of radiation emitted by the radiative centres and that focuses a portion of the hollow cone of radiation onto a detector, wherein the detector is arranged to selectively detect the focused light.

In an embodiment of the present invention, the device may further comprise a prism that is capable of redirecting radiation emitted at the layer of conductive material by total internal reflection. Optionally, the prism may form all or part of the first medium.

In an embodiment of the present invention, the device may further comprise means for exciting radiative centres, e.g. one or more luminophores, in order to generate a radiative response.

The means for exciting the radiative centres may be a source of electromagnetic waves such as e.g. a radiative source. The excitation source is advantageously capable of exciting radiative centres captured by the layer of functional molecules. The excitation source may be adapted to excite the radiative source either from the second medium side or from the first medium side. For instance, a radiation source may be arranged to direct excitation radiation comprising the excitation wavelength through the first medium and then to the layer of conductive material in such a way that the angle of incidence on the first layer is equal to the surface plasmon angle of the excitation wavelength. Advantageously, the excitation source comprises a radiation source capable of producing radiation comprising an radiation wavelength of radiative centres, the radiation source being arranged to direct radiation from the radiation source toward the layer of conductive material.

According to embodiments of the present invention, the device may be (part of) or comprised in an optical fibre. The latter has the advantage that it can be easily transported.

In another aspect, the present invention relates to a method for detecting radiation in a biological, chemical or biochemical assay using surface plasmon-coupled emission. The method comprises contacting a device comprising a conductive layer with a sample fluid comprising an analyte, the analyte comprising a radiative center or being able to bind to a radiative center. The method also comprises causing the analyte to be adjacent to the surface of the device. The method furthermore comprises supporting grating assisted Plasmon emission and suppressing non-grating assisted Plasmon emission representative of radiation emitted by the radiative center. The method also comprises detecting radiation of excited radiative centers using surface plasmon - coupled emission. Detecting thereby may comprise detecting at least grating-assisted outcoupled radiation, coupled out using a first plasmon having an effective refractive index higher than the refractive index of the first solid medium. The device may comprise a first solid medium. The conductive layer and the first solid medium may be adapted for grating assisted outcoupling of the radiation. Other method steps optionally also may be included, such as for example but not limited to method steps expressing the functionality of one, more or all components of the device embodiments described above.

Other arrangements for accomplishing the objectives of the devices and methods embodying the invention will be obvious for those skilled in the art.

It is to be understood that although preferred embodiments, specific constructions and configurations, as well as materials, have been discussed herein for devices according to the present invention, various changes or modifications in form and detail may be made. For example, the features of the first exemplary embodiment and the second exemplary embodiment can be combined, i.e. both, a high refractive index dielectric layer above the layer of conducting material and a low refractive index first medium can be used in the same device. Also, additional layers (e.g. high refractive index layer(s)) between the fist medium and the layer of conductive material may be added, advantageously with a total layer thickness not exceeding an optical thickness of half a wavelength (for example, 80 nm of $TiO_2$ for light with a wavelength of 633 nm in vacuum).

## Claims

1. A device for detecting radiation emitted in a biological, chemical and/or biochemical assay using surface plasmon-coupled emission, the device comprising: a conductive layer (1) comprising a grating, wherein the conductive layer is adapted for supporting a first plasmon having at least a substantial intensity,

   wherein said device is furthermore adapted for supporting grating assisted Plasmon emission and for suppressing non-grating assisted Plasmon emission.

2. A device according to claim 1, said device being adapted for avoiding non-grating assisted Plasmon emission.

3. A device according to any of the previous claims, wherein the device furthermore comprises a first solid medium (2) having a first index of refraction $n_{first}$, wherein the conductive layer is adapted for supporting the first Plasmon with at least a substantial intensity at the surface of the conductive layer facing away from the first medium and wherein the effective refractive index $n_{eff}$ of said first Plasmon is higher than said first refractive index $n_{first}$.

**4.** A device according to claim 3, wherein said conductive layer (1) and said first medium (2) being adapted for grating-assisted outcoupling of radiation comprises said conductive layer (1) and said first medium (2) being adjacent each other or being separated by one or more intermediate layers (8) having a total optical thickness smaller than half a wavelength.

**5.** A device according to any of claims 3 to 4, the device comprising a layer of dielectric material (5) contacting said surface of said layer of conductive material (1) facing away from said first medium (2) and having an optical thickness adapted in such a way that said first plasmon has an $n_{eff}$ higher than $n_{first}$.

**6.** A device according to claim 5 wherein the optical thickness of the dielectric layer (5) is between 5 nm and 80 nm.

**7.** A device according to any of claims 5 or 6, wherein the refractive index of the dielectric layer (5) is 1.4 or more.

**8.** A device according to any of claims 3 to 7, wherein said first medium (2) has an optical thickness of 300 nm or more.

**9.** A device according to any of claims 3 to 8, wherein the effective refractive index $_{neff}$ of said first plasmon is lower than the effective refractive index $_{neff}^*$ of said second plasmon wherein $_{neff}^*$ is defined as follow:

$$n_{eff}* = \sqrt{\frac{\varepsilon_m \varepsilon_{first}}{\varepsilon_m + \varepsilon_{first}}} \, ,$$

wherein $_{\varepsilon m}$ is the complex dielectric constant of the layer of conductive material (1) and wherein $_{\varepsilon first}$ is the real dielectric constant of the first medium (2).

**10.** A device according to any previous claims further comprising a radiation detector for detecting the radiation coupled out through said first medium.

**11.** A device according to any of the previous claims, wherein said device further comprises a layer comprising functional molecules capable of binding analyte molecules comprising one or more types of luminophores.

**12.** A device according to any previous claims, further comprising means for exciting luminescent centers near the conductive layer in order to generate said radiation.

**13.** A device according to any previous claims wherein said device is an optical fiber.

**14.** A method for detecting radiation in a biological, chemical or biochemical assay using surface plasmon-coupled emission, the method comprising

    - contacting a device comprising a conductive layer (1) with a sample fluid comprising an analyte, said analyte comprising a radiative center or being able to bind to a radiative center,
    - causing said analyte to be adjacent to the surface of said device,
    - supporting grating-assisted Plasmon emission and suppressing non-grating assisted Plasmon emission and,
    - detecting at least grating-assisted Plasmon emission.

# FIG. 1

# FIG. 2

**FIG. 3**

**FIG. 4**

FIG. 5

FIG. 6

**FIG. 7**

**FIG. 8**

FIG. 9

FIG. 10

# FIG. 11

TiO$_2$ film thickness (nm)

# FIG. 12

FIG. 13

FIG. 14

FIG. 15

**European Patent Office**

**EUROPEAN SEARCH REPORT**

Application Number

EP 08 30 5117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/053974 A1 (LAKOWICZ JOSEPH R [US] ET AL) 10 March 2005 (2005-03-10) * paragraphs [0011], [0051], [0115] - [0131], [0150], [0171] - [0176]; figures 6,10B-D,17 * ----- | 1-14 | INV. G01N21/47 G01N21/64 G01N33/551 G02B6/122 |
| X | US 5 841 143 A (TUMA MARGARET [US] ET AL) 24 November 1998 (1998-11-24) * column 1, lines 12-36 * * column 3, line 11 - column 8, line 43; figure 1 * ----- | 1-5,7,9, 10,12,14 | |
| X | US 4 882 288 A (NORTH JOHN R [GB] ET AL) 21 November 1989 (1989-11-21) * figures 1,3 * * column 1, lines 4-7 * * column 2, line 18 - column 3, line 32 * * column 4, line 12 - column 5, line 12 * * column 6, line 64 - column 7, line 16 * * column 8, lines 3-38; figure 3 * ----- | 1,2,4,6, 7,10-12, 14 | |
| A | CALANDER N: "THEORY AND SIMULATION OF SURFACE PLASMON-COUPLED DIRECTIONAL EMISSION FROM FLUOROPHORES AT PLANAR STRUCTURES" ANALYTICAL CHEMISTRY, AMERICAN CHEMICAL SOCIETY. COLUMBUS, US, vol. 76, no. 8, 15 April 2004 (2004-04-15), pages 2168-2173, XP001196785 ISSN: 0003-2700 * the whole document * ----- | | TECHNICAL FIELDS SEARCHED (IPC) G01N G02B |

The present search report has been drawn up for all claims

| Place of search | Date of completion of the search | Examiner |
|---|---|---|
| Munich | 8 July 2008 | Duijs, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 112 500 A1**

## ANNEX TO THE EUROPEAN SEARCH REPORT
## ON EUROPEAN PATENT APPLICATION NO.

EP 08 30 5117

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2008

| Patent document cited in search report | | Publication date | Patent family member(s) | | Publication date |
|---|---|---|---|---|---|
| US 2005053974 | A1 | 10-03-2005 | NONE | | |
| US 5841143 | A | 24-11-1998 | NONE | | |
| US 4882288 | A | 21-11-1989 | AU | 591070 B2 | 30-11-1989 |
| | | | AU | 4806285 A | 08-04-1986 |
| | | | CA | 1263599 A1 | 05-12-1989 |
| | | | DE | 3582296 D1 | 02-05-1991 |
| | | | EP | 0178083 A1 | 16-04-1986 |
| | | | WO | 8601901 A1 | 27-03-1986 |
| | | | JP | 6058370 B | 03-08-1994 |
| | | | JP | 62500736 T | 26-03-1987 |
| | | | NO | 861912 A | 08-07-1986 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005003743 A